# EUROPEAN PATENT SPECIFICATION

(11) **EP 2 366 605 B1**
(45) Date of publication and mention of the grant of the patent: **15.02.2012**
(21) Application number: 11156023.1
(22) Date of filing: 25.02.2011
(51) Int. Cl.: B62D 25/00, B62D 25/20

(54) **Vehicle body floor structure**
Fahrzeugaufbaubodenkonstruktion
Structure de plancher de carrosserie de véhicule

(30) Priority: 04.03.2010 JP 2010047846
(43) Date of publication of application: 21.09.2011
(73) Proprietor: Honda Motor Co., Ltd., Tokyo 107-8556 (JP)
(72) Inventor: Yasuhara, Shigeto, Saitama 351-0193 (JP); Imamura, Shogo, Saitama 351-0193 (JP); Hattori, Hiroyuki, Saitama 351-0193 (JP); Kihara, Makoto, Saitama 351-0193 (JP); Kominamidate, Masami, Saitama 351-0193 (JP); Shirasaya, Masahito, Saitama 351-0193 (JP)
(74) Representative: Trossin, Hans-Jürgen

(56) References cited:
- JP-A- 2007 210 572
- US-A- 5 110 177
- US-A1- 2009 001 766

## Description

The present invention relates to vehicle body structures where a fluid container is disposed under a central region of a front seat floor, and more particularly to a vehicle body floor structure which can effectively minimize deformation of an under body when the vehicle contacts or collides with another object, such as another vehicle.

Many of the conventionally-known vehicle body floor structures are designed to achieve a reduced weight reduction of the vehicle body and secure an increased anti-collision strength of the vehicle body. For such purposes, in some vehicle body floor structures where a fuel tank is disposed under a floor of front seats, first and second cross members and left and right floor frames are disposed in such a manner as to surround the fuel tank. Further, front seat brackets project from left and right side sills, disposed under vehicle doors, toward corresponding ones of the floor frames for fixing thereto the front seats. With such an arrangement, the first cross member can reduce or minimize impact force transmitting to the left and right floor frames, thereby permitting weight reduction of the floor frames (see, for example, Japanese Patent Application Laid-Open Publication No. 2007-210572).

However, when impact force transmits to the floor frames at the time of a frontal collision of the vehicle, the floor frames may deform from near a front portion of the fuel tank. An exhaust pipe is disposed in front of the fuel tank and the floor frames are disposed in an arch shape over the exhaust pipe. Thus, the floor frames can easily become a starting point of deformation.

As an amount of displacement, due to deformation, of any of the floor frames increases, a floor panel may sink down, and thus, the front seats may also sink down together with the front seat brackets. Further, as any of the side sills disposed under the doors deforms at the time of a lateral collision of the vehicle, the corresponding front seat bracket may be displaced by a great amount.

Therefore, there has been a demand for an improved vehicle body floor structure which can effectively minimize an amount of displacement, due to deformation, of the floor frames at the time of a frontal collision and a lateral collision

In view of the foregoing prior art problems, it is an object of the present invention to provide an improved vehicle body floor structure which can minimize an amount of displacement, due to deformation, of floor frames at the time of a frontal collision and which allows impact force to effectively transmit from a side sill to the corresponding floor frame at the time of a lateral collision.

In order to accomplish the above-mentioned object, the present invention provides an improved vehicle body floor structure, which comprises left and right front side frames disposed in front of a passenger compartment, and left and right floor frames extending continuously from the left and right front side frames, a floor panel of the passenger compartment having a raised floor portion formed to be located above a fluid container disposed between the left and right floor frames, and which is characterized in that each of the left and right floor frames has a generally U sectional shape having an upward opening and is fixedly joined at opposed upper end edge portions of the upward opening to the lower surface of the floor panel to thereby define a closed sectional shape in conjunction with the lower surface of the floor panel, a bottom potion of each of the left and right floor frames, as viewed from a side of a vehicle body, being curved upwardly in an arch shape such that a top region of the curved bottom portion is disposed close to the floor panel and beneath a front wall portion of the raised floor portion, and in that the left and right floor frames have left and right floor frame reinforcing members, each extending forward from near the front wall portion of the raised floor portion and having a generally inverted U sectional shape having a downward opening, each of the floor frame reinforcing members being fixedly joined at opposed lower end edge portions of the downward opening to the upper surface of the floor panel, in vertically overlapping relation to the upper end edge portions of a corresponding one of the front side frames, to thereby define a closed sectional shape in conjunction with the upper surface of the floor panel. In this manner, the floor frames and the floor frame reinforcing members are fixed to each other at the upper end edge portions and the lower end edge portions with the floor panel sandwiched therebetween and with the closed sectional shapes defined over and under the floor panel.

In the present invention, each of the floor frame reinforcing members is fixed at its opposed lower end edge portions to the opposed upper end edge portions of the corresponding floor frame with the floor panel sandwiched therebetween and with the closed sectional shapes defined over and under the floor panel. Thus, once impact force is input to the front of the vehicle due to a frontal collision of the vehicle, the input force is dispersed to the floor frames each defining the closed sectional shape under the floor panel and to the floor frame reinforcing members each defining the closed sectional shape over the floor panel.

Further, at the time of a frontal collision, the present invention can advantageously prevent the floor frames from bending downward and sinking down with the top regions as bending start points. Note that, even in a case where each of the floor frames is formed to arcuately curve outwardly leftward or rightward from its front end portion to near the raised floor portion as viewed in plan, it is relatively easy to form the closed sectional shape between the upper wall portion of the floor frame reinforcing member and the upper surface of the floor panel, in vertically opposed relation to the closed sectional shape defined between the floor frame and the lower surface of the floor panel.

Preferably, the vehicle body floor structure of the present invention further comprises left and right front seat brackets each extending in a vehicle width direction from a rear end portion of a corresponding one of the floor frame reinforcing members to a corresponding one of the left and right side sills defining left and right side edges of the floor, each of the seat brackets being fixedly joined to the rear end portion of the corresponding floor frame reinforcing member and to the corresponding side sill. Thus, each of the seat brackets is supported by the corresponding floor frame reinforced by the floor frame reinforcing member, so that an amount of deformation of the seat bracket can be minimized at the time of a frontal collision. In this way, the present invention can minimize sinking down of a front portion of a front seat.

Preferably, each of the seat brackets defines a closed sectional shape immediately under the floor panel. Thus, once impact force is input to a side surface of the vehicle due to a lateral collision of the vehicle, the input impact force can be transmitted from any of the side sills to the corresponding floor frame. Namely, the vehicle body floor structure of the present invention can be used efficiently to disperse impact force input to a front surface and side surface of the vehicle.

Preferably, as viewed from a side of the vehicle body, each of the seat brackets has a stepwise sectional shape. Thus, by fixedly joining, to the corresponding side sill, a portion (front slant portion) of a desired height extending upward from a lower bracket step portion to an upper bracket step portion, the present invention can achieve an increased strength of the vehicle body floor structure against impact force acting downwardly on the structure. Consequently, the vehicle body floor structure of the invention can be constructed with ease through simple bending work of material plates and significantly reduced in weight. In addition, the vehicle body floor structure of the invention can have a sufficient strength for withstanding any sinking loads. Further, in the present invention, each of the seat brackets can be disposed at any desired position, e.g. at a more rearward position, between the floor frame and the side sill. Thus, the present invention can achieve an enhanced design freedom.

Preferably, each of the seat brackets has a reinforcing plate fixedly joined to at least part thereof and to the corresponding side sill. Thus, the present invention can even further reduce the weight of the seat bracket as compared to a seat bracket having a great plate thickness.

Preferably, the left and right floor frame reinforcing members are interconnected by each of the floor frame reinforcing members being fixedly connected at a front portion thereof to a reinforcing portion of a dashboard lower panel that constitutes a front partition wall of the passenger compartment. Namely, the floor frame reinforcing members are interconnected via the dashboard lower panel. Thus, once impact force is input to the front of the vehicle due to a frontal collision of the vehicle, the input force can be dispersed from the front portions of the floor frames to the reinforcing portion of the dashboard lower panel. As a consequence, the impact force acting on the floor frames can be decreased, which can minimize an amount of deformation of the floor frames at the time of a frontal collision of the vehicle.

The following will describe embodiments of the present invention, but it should be appreciated that the present invention is not limited to the described embodiments and various modifications of the invention are possible without departing from the basic principles. The scope of the present invention is therefore to be determined solely by the appended claims.

Certain preferred embodiments of the present invention will be described in detail below, by way of example only, with reference to the accompanying drawings, in which:
Fig. 1 is a perspective view showing an embodiment of a vehicle body floor structure of the present invention;
Fig. 2 is a right-rear perspective view of the embodiment of the vehicle body floor structure with a floor panel removed for clarity;
Fig. 3 is a sectional view taken along line 3 - 3 of Fig. 1;
Fig. 4 is a left-rear perspective view of the embodiment of the vehicle body floor structure with the floor panel removed for clarity;
Fig. 5 is a sectional view taken along line 5 - 5 of Fig. 1;
Fig. 6 is a sectional view taken along line 6 - 6 of Fig. 1;
Fig. 7 is a sectional view taken along line 7 - 7 of Fig. 1;
Fig. 8 is a sectional view taken along line 8 - 8 of Fig. 1; and
Fig. 9 is a view illustrating a mechanism which can achieve an increased strength of the vehicle body floor structure.

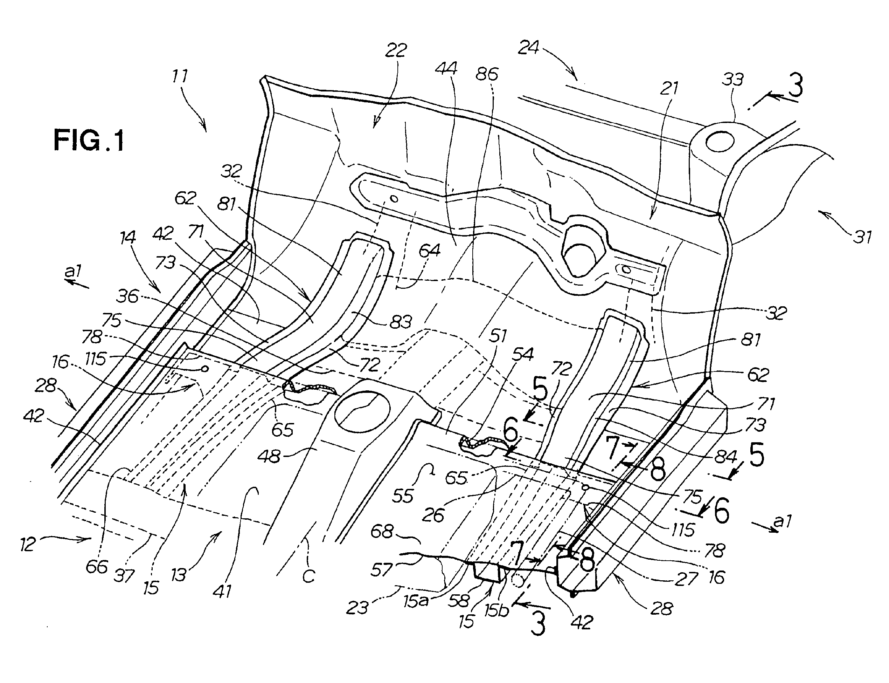

Reference is now made to Fig. 1 showing in perspective a vehicle body floor structure according to an embodiment of the present invention. As shown in Fig. 1, the embodiment of the vehicle body floor structure is employed in a floor or under body 13 of a vehicle body 14, defining a passenger compartment 12 of a vehicle 11, for effectively minimizing deformation of the under body 13.

The embodiment of the vehicle body floor structure includes left and right floor frames 15 fixed to the under body 13, and left and right seat brackets 16 fixed to the left and right floor frames 15. The embodiment of the vehicle body floor structure is constructed in left-right horizontal symmetry about a longitudinal centerline C of the vehicle body 14. Thus, the following mainly describe a right-half section of the vehicle body floor structure.

In the vehicle 11, a fluid tank (fuel tank) 23 is disposed under a floor of a driver's seat 21 and an assistant driver's seat 22, i.e. under the under body 13, and an engine (not shown) is disposed in an engine room 24 in front of the driver's seat 21.

A collective exhaust pipe connected to the engine branches left and right, so that the first branch exhaust pipe 26, branched from the collective exhaust pipe, extends in front of the fuel tank 23. More specifically, the first branch exhaust pipe 26 extends along a front wall of the fuel tank 23 and under the floor frames 15. The second branch exhaust pipe 27 extends along left and right side sills 28 in partly overlapping relation to the first branch exhaust pipe 26.

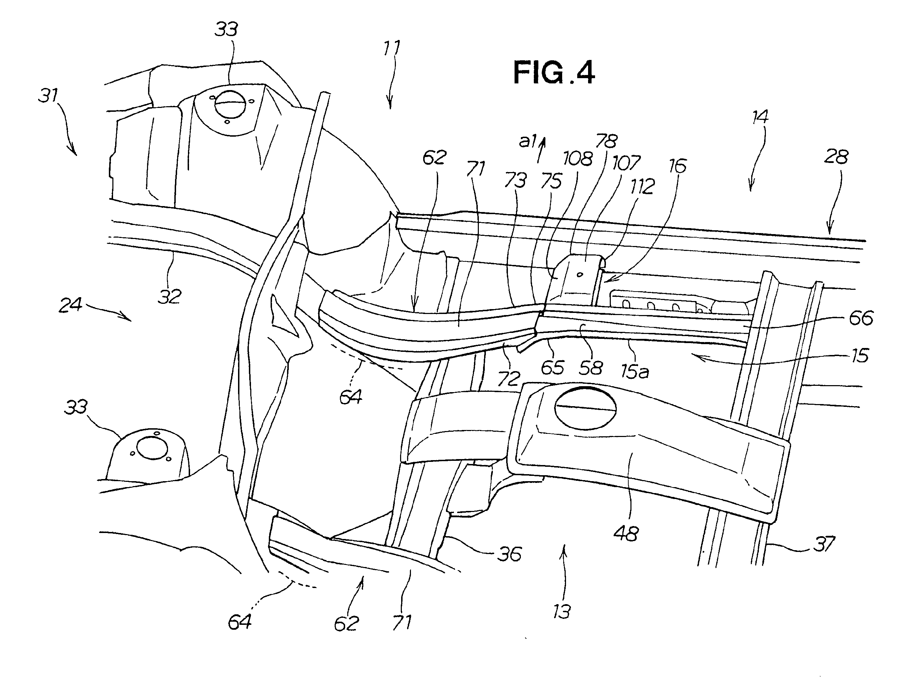

As shown in Figs. 1 to 4, the vehicle body 14 includes the under body 13 and a front body 31 disposed in front of the under body 13. The front body 31 includes left and right front side frames 32 (see Fig. 4). A damper housing 33 extends vertically from the left and right front side frames 32, and the under body 13 extends rearward continuously from the left and right front side frames 32.

The under body 13 includes: the left and right floor frames 15 connecting to the rear ends of corresponding ones of the left and right front side frames 32; a first cross member 36 fixedly connected at its opposite ends to the left and right floor frames 15; the left and right side sills 28; and a second cross member 37 disposed rearwardly of the first cross member 36 and fixedly connected at its opposite ends to the left and right side sills 28.

The first cross member 36 and the second cross member 37 each have a generally hat-like or U sectional shape opening upwardly, i.e. having an upward opening. A floor panel 41 is fixedly joined to the upper end edges of the upward openings of the first and second cross members 36 and 37 to thereby close the upward openings. Thus, each of the first and second cross members 36 and 37 each define a closed sectional shape in conjunction with the floor panel 41.

Further, in the under body 13, the floor panel 41 is disposed between the left and right side sills 28 and fixedly joined at its left and right welding margin portions (i.e., overlap widths for welding) 42 to the left and right side sills 28, and a dashboard lower panel 44 constitutes a front partition wall of the passenger compartment 12.

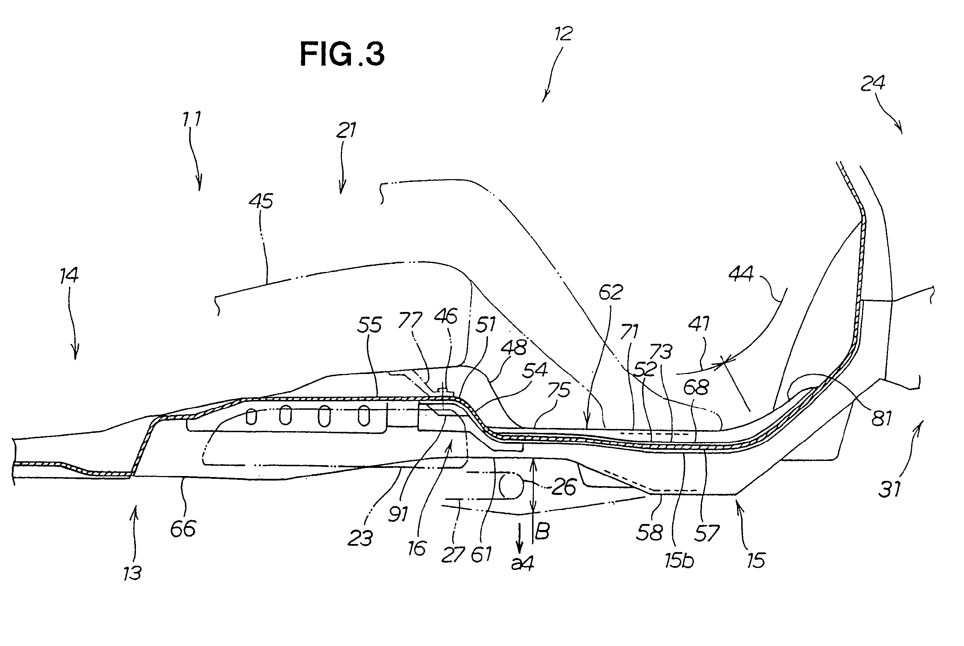

Further, a seat section 45 (Fig. 3) of the driver's seat 21 and a seat section (similar to the seat section 45) of the assistant driver's seat 22 are fixed to the under body 13 by means of bolts 46. A center tunnel 48 is provided between the driver's seat 21 and the assistant driver's seat 22.

The following describe main components of the embodiment of the vehicle body floor structure, with reference to Figs. 1 to 8.

In the vehicle body floor structure, the floor frames 15 of the under body (floor) 13 constituting part of the passenger compartment 12 extend continuously with the left and right front side frames 32 disposed in front of the passenger compartment 12, and the floor panel 41 of the under body (floor) 13 has a raised floor portion 51 raised above the fluid container (fuel tank) 23 disposed between the floor frames 15.

The floor panel 41 has a front seat floor section 52 forming the floor of the driver's seat 21 and assistant driver's seat 22, and the raised floor portion 51 is formed integrally with the front seat floor section 52 and higher by a predetermined height than the upper surface of a bottom portion of the front seat floor section 52 in positionally corresponding relation to the fuel tank 23.

The raised floor portion 51 includes an oblique front wall portion 54 formed integrally with the front seat floor section 52, a container positioning floor portion 55 is formed integrally with the front wall portion 54 and higher than the front seat floor section 52 and extending substantially horizontally toward the rear of the vehicle.

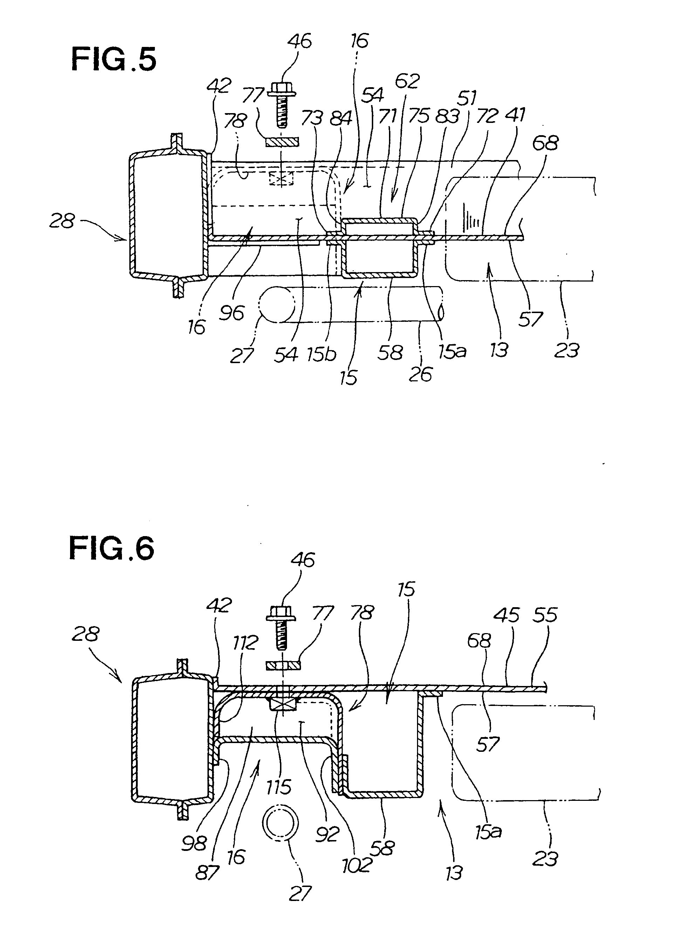

The floor frame 15 has a generally hat-like or "U" sectional shape opening upwardly, i.e. having an upward opening, and is fixedly joined at its opposed upper end edge portions (15a and 15b) of the upward opening to the lower surface 57 of the floor panel 41 with its base or bottom 58 opposed to the lower surface 57, to thereby define a closed sectional shape in conjunction with the lower surface 57 of the floor panel 41 (see Figs. 1 and 5). As viewed from a side of the vehicle body 14 (see Fig. 3), the base or bottom potion 58 is curved upwardly in an arch shape with its top region 61 disposed close to the floor panel 41 and located beneath the front wall portion 54 of the raised floor portion 51. A floor frame reinforcing member 62 is opposed to and fixed to the floor frame 15 via the floor panel 41. The top region 61 is raised higher than the first branch exhaust pipe 26 to avoid interference with the first branch exhaust pipe 26 branched from the collective pipe.

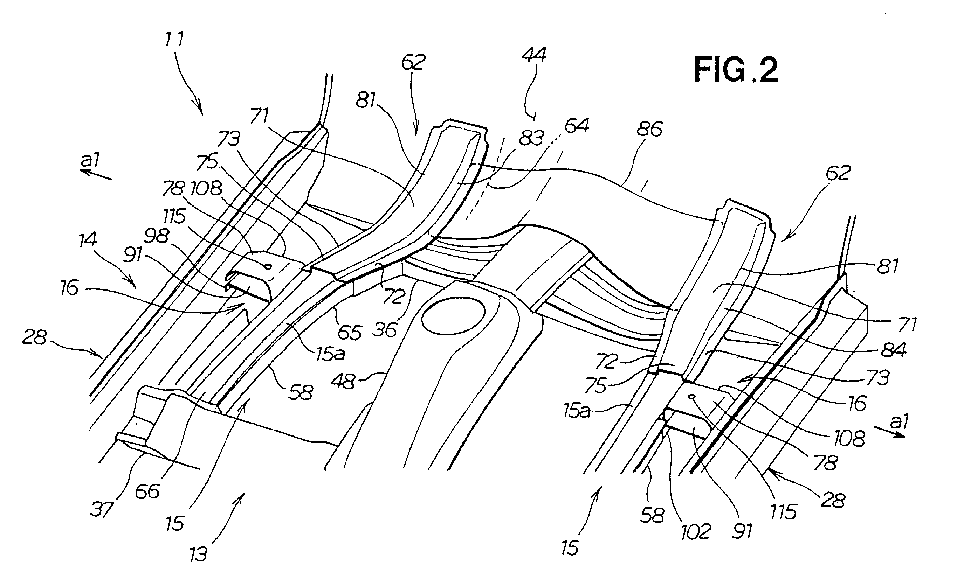

As shown in Figs. 2 and 4, each of the floor frames 15 is arcuately curved in an outward direction of the vehicle 11 (i.e., in a direction of arrow a1) from its front end portion 64 to its longitudinally middle portion 65 and extends substantially straight along the sill 28 from the middle portion 65 to its rear end 66.

In other words, the floor frame 15 curves toward the side sill 28 from the front end portion 64 to the longitudinally middle portion 65 having the seat bracket 16 fixed thereto, extends straight in proximity to the side sill 28 from the middle portion 65 to the rear end 66, and is fixedly joined at the rear end 66 to the second cross member 37.

The floor frame reinforcing member 62 extends forward from near the front wall portion 54 of the raised floor portion 51 and has a generally hat-like or inverted U sectional shape opening downward, i.e. having a downward opening (see Fig. 5) with its ceiling or upper wall portion 71 opposed to the upper surface 68 of the floor panel 41. The floor frame reinforcing member 62 is fixedly joined at its opposed lower end edge portions (inner and outer joint margin portions 72 and 73) of the downward opening to the upper surface of the floor panel 41, in vertically overlapping relation to the upper end edge portions 15a and 15b of the floor frame 15, to thereby define a closed sectional shape in conjunction with the upper surface 68 of the floor panel 41.

In the aforementioned manner, the front side frames 32 and the floor frame reinforcing members 62 are fixed to each other at the upper end edge portions 15a, 15b and the lower end edge portions 72, 73 with the floor panel 41 sandwiched therebetween and with the closed sectional shapes defined over and under the floor panel 41.

Even where each of the floor frames 15 is formed to arcuately curve outwardly leftward or rightward from its front end portion to near the raised floor portion 51 as noted above, it is relatively easy to form the closed sectional shape between the upper wall portion of the floor frame reinforcing member 62 and the upper surface of the floor panel 41, in vertically opposed relation to the closed sectional shape defined between the floor frame 15 and the lower surface of the floor panel 41.

The seat bracket 16 is provided for a front leg portion 77 (Fig. 3) of the front seat (i.e., seat section 45 of the driver's seat 21), and this seat bracket 16 extends in a width direction of the vehicle 11 from a rear end portion 75 of the floor frame reinforcing member 62 to the side sill 28 and is fixedly joined at its one end to the rear end portion 75 of the floor frame reinforcing member 62 and at its other end to the side sill 28.

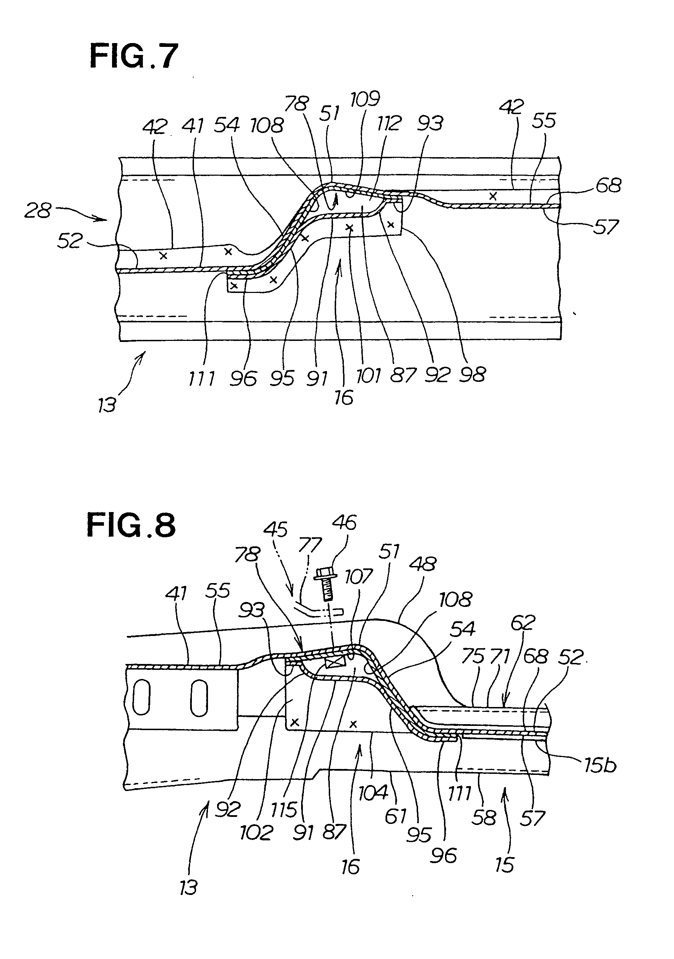

The seat bracket 16 forms or defines a closed sectional section (i.e., closed space portion 87 shown in Figs. 7 and 8) immediately under the floor panel 41. As viewed from a side of the vehicle body 14, the seat bracket 16 has a stepwise sectional shape, as shown in Figs. 7 and 8. The seat bracket 16 has a reinforcing plate 78 not only fixedly joined to at least a portion of the upper surface (e.g., front slant portion 95 or rear end portion 93) of the bracket 16 in vertically overlapped relation thereto but also fixedly joined to the side sill 28.

The floor frame reinforcing member 62 is fixedly connected at its front end portion 81 to a reinforcing portion of the dashboard lower panel 44 functioning as the front partition wall of the passenger compartment 12, so that the respective front end portions 81 of the floor frame reinforcing members 62 fixedly joined to the left and right floor frames 15 are interconnected via the dashboard lower panel.

The following describe in more detail the floor frame reinforcing member 62 fixed to the floor frame 15. Each of the floor frame reinforcing members 62 is formed in the same width (i.e., dimension in the vehicle width direction) as the floor frame 15 and arcuately curved in conformity to the curve (in the direction of arrow al) of the floor frame 15.

The floor frame reinforcing member 62, as shown in Fig. 15, has a upper wall portion 71, an inner wall portion 83, the inner joint margin portion (i.e., overlap width for joint) 72, an outer wall portion 84, and the outer joint margin portion 73.

As further shown in Fig. 3, the closed section formed or defined by the floor frame reinforcing member 62 and the floor panel 41 gradually decreases in sectional area toward the rear end portion 75. As noted above, the seat bracket 16 is fixedly joined to the rear end portion 75.

The following describe in greater detail the seat bracket 16. As shown in Figs. 5 to 8, the seat bracket 16 includes the reinforcing plate 78 fixedly placed on the body of the seat bracket 16 to define the closed space portion 87. The seat bracket 16 has an upper bracket step portion 91 extending substantially horizontally beneath a fastening portion of the front leg portion 77 (Fig. 3) of the front seat (i.e., seat section 45 of the driver's seat 21 in the illustrated example). The seat bracket 16 also has a rear wall portion 92 and rear end portion 93 formed continuously or integrally with the upper bracket step portion 91 and located higher than the upper bracket step portion 91.

Further, the seat bracket 16 has the front slant portion 95 formed integrally with the upper bracket step portion 91, and a lower bracket step portion 96 formed integrally with the front slant portion 95 and located lower than the upper bracket step portion 91. The seat bracket 16 further has an outer flange 98 (Fig. 7) formed integrally with the above-mentioned portions 91 to 93, 95 and 96, and the seat bracket 16 is welded at the outer flange 98 to the side sill 28 as indicated at 101.

The seat bracket 16 further has an inner flange 102 opposed to the outer flange 98. The inner flange 102 has its lower end edge 104 fixedly joined to the floor frame 15 by welding. The inner flange 102 is formed integrally with the upper bracket step portion 91, rear wall portion 92, rear end portion 93 and front slant portion 95.

The front seat (i.e., seat section 45 of the driver's seat 21 in the illustrated example) is fixedly placed on the reinforcing plate 78 of the seat bracket 16. The reinforcing plate 78 has a leg fastening portion 107 provided over the upper bracket step portion 91 for fixing thereto the front leg portion 77 of the seat section 45. The fastening portion 107 is sandwiched between, and fixedly joined to, the raised floor portion 51 and the rear end portion 93 of the seat bracket 16.

By the provision of the reinforcing plate 78 defining the closed space portion 87, the instant embodiment can even further reduce the weight of the seat bracket 16, as compared to a seat bracket having a great plate thickness.

Further, a front intermediate-layer wall portion 108 is formed integrally with the fastening portion 107 in overlapping relation to the raised floor portion 51, and it is sandwiched between, and fixedly joined to, the raised floor portion 51 and the seat bracket 16. Furthermore, a lower intermediate layer portion 111 is formed integrally with the front intermediate-layer wall portion 108 and sandwiched between, and fixedly joined to, the raised floor portion 51 and the seat bracket 16. As shown in Figs. 6 and 7, the reinforcing plate 78 of the seat bracket 16 is fixedly joined at its outer joint portion to the side sill 28. The leg fastening portion 107 has a female thread portion (or nut) 115 for screwing therein of the bolt 46.

Whereas the foregoing have mainly described the right-half section of the vehicle body floor structure, the left-half section of the vehicle body floor structure is generally identical in construction to the right-half section. The term "substantially" is used herein to refer to a range from upper to lower limits of tolerance; conversely, the limitation "horizontally" and the like without the word "substantially" should each be interpreted as including some tolerance.

Next, a description will be given about behavior of the embodiment of the vehicle body floor structure of the present invention.

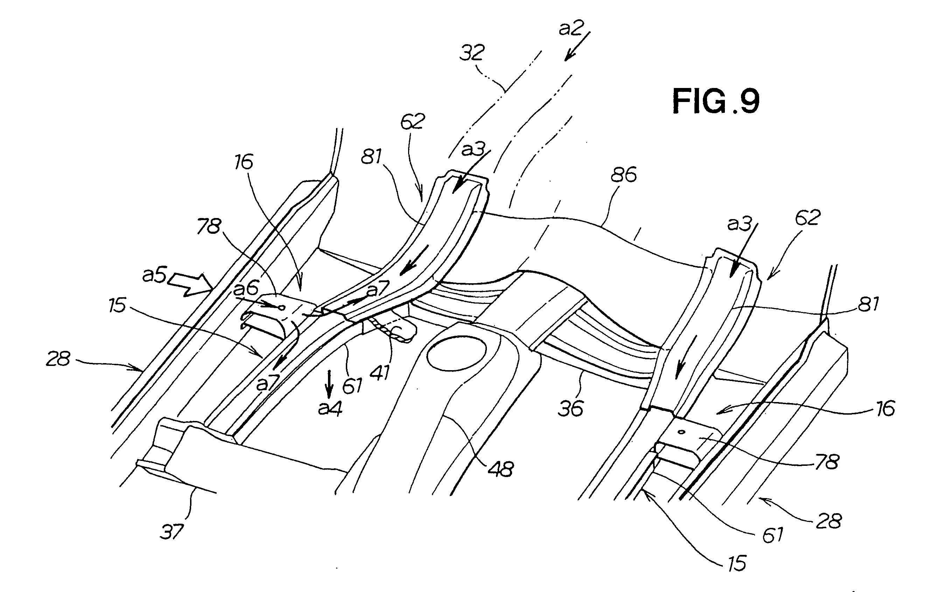

First, with reference to Figs. 1, 3 and 9, the following paragraphs describe a mechanism which can achieve an increased strength of the vehicle body floor structure against collisions of the vehicle.

Once impact force is input to the front of the vehicle 11 as indicated by arrow a2, the input impact force is dispersed to the floor frame reinforcing members 62 as indicated by arrow a3 and to the raised floor portion 51, so that the floor frames 15 are not subject to much of the input impact force.

The floor frame reinforcing members 62 each disperse the input impact force by virtue of its closed sectional shape, and thus, the impact force transmitting to (and concentrating on) a small or limited region of the top region 61 can be decreased. Further, because the impact force is transmitted from rear end portions of the floor frame reinforcing members 62 to the front wall portion 54 of the raised floor portion 51, the impact force transmitting to (and concentrating on) a small or limited region of the top region 61 can be further decreased.

As a consequence, the instant embodiment can minimize an amount of displacement B of the floor frames 15, caused by the floor frames 15 bending downward from the top regions 61 as indicated by arrow a4 with the top regions 61 as bending start points and sinking down as indicated by two-dot-dash or imaginary line.

Further, because the amount of displacement of the floor frames 15, caused by sinking down at the time of a frontal collision of the vehicle can be minimized by the floor frame reinforcing members 62, the instant embodiment can minimize an amount of downward displacement of the seat bracket 16, to thereby minimize sinking down of a front portion of the front seat.

Furthermore, once impact force is input to a side surface of the vehicle 11 as indicated by arrow a5, the input impact force transmits to the seat bracket 16 as indicated by arrow a6, from which it transmits to and disperses through the floor frame 15 as indicated by arrow a7. In this way, the instant embodiment can minimize an amount of displacement of the seat bracket 16, and hence an amount of displacement of the seat section 45.

The vehicle body floor structure of the present invention is well suited for application to vehicles, such as automotive vehicles.

Left and right floor frames (15) each have a U sectional shape having an upward opening and is fixedly joined at upper end edge portions (15a, 15b) of the opening to the lower surface of a floor panel (41). Left and right floor frame reinforcing members each extend forward from near a raised floor portion (51) and has an inverted U sectional shape having a downward opening. Each of the reinforcing members is fixed at its lower end edge portions (72, 73) of the downward opening to the upper end edge portions of a corresponding one of the floor frames with the floor panel sandwiched therebetween and with closed sectional shapes defined over and under the floor panel.

## Claims

1. A vehicle body floor structure which comprises: left and right front side frames (32) disposed in front of a passenger compartment (12); and left and right floor frames (15) extending continuously from the left and right front side frames, a floor panel (41) of the passenger compartment having a raised floor portion (51) formed to be located above a fluid container (23) disposed between the left and right floor frames (15),
**characterized in that** each of the left and right floor frames (15) has a generally U sectional shape having an upward opening and is fixedly joined at opposed upper end edge portions (15a, 15b) of the upward opening to a lower surface of the floor panel (41) to thereby define a closed sectional shape in conjunction with the lower surface of the floor panel, a bottom potion (58) of each of the left and right floor frames, as viewed from a side of a vehicle body (14), being curved upwardly in an arch shape such that a top region (61) of the curved bottom portion (58) is disposed close to the floor panel and beneath a front wall portion (54) of the raised floor portion, and
**in that** the left and right floor frames (15) have left and right floor frame reinforcing members (62), respectively, each extending forward from near the front wall portion of the raised floor portion and having a generally inverted U sectional shape having a downward opening, each of the floor frame reinforcing members (62) being fixedly joined at opposed lower end edge portions (72, 73) of the downward opening to an upper surface of the floor panel (41), in vertically overlapping relation to the upper end edge portions (15a, 15b) of a corresponding one of the front side frames, to thereby define a closed sectional shape in conjunction with the upper surface of the floor panel, whereby the floor frames (15) and the floor frame reinforcing members (62) are fixed to each other at the upper end edge portions and the lower end edge portions with the floor panel sandwiched therebetween and with the closed sectional shapes defined over and under the floor panel.

2. The vehicle body floor structure of claim 1, further comprising left and right front seat brackets (16) each extending in a vehicle width direction from a rear end portion (75) of a corresponding one of the floor frame reinforcing members (62) to a corresponding one of left and right side sills (28) defining left and right side edges of the floor, each of the seat brackets (16) being fixedly joined to the rear end portion (75) of the corresponding floor frame reinforcing member (62) and to the corresponding side sill (28).

3. The vehicle body floor structure of claim 2, wherein each of the seat brackets (16) defines a closed sectional shape immediately under the floor panel (41).

4. The vehicle body floor structure of claim 2 or 3, wherein, as viewed from a side of the vehicle body, each of the seat brackets (16) has a stepwise sectional shape.

5. The vehicle body floor structure according to any one of claims 2 to 4, wherein each of the seat brackets (16) has a reinforcing plate (78) fixedly joined to at least part thereof and to the corresponding side sill.

6. The vehicle body floor structure of any one of claims 1 to 5, wherein the left and right floor frame reinforcing members (62) are interconnected by each of the floor frame reinforcing members being fixedly connected at a front portion (81) thereof to a reinforcing portion (86) of a dashboard lower panel (44) that constitutes a front partition wall of the passenger compartment.

## Patentansprüche

1. Fahrzeugkörper-Bodenstruktur, welche umfasst: linke und rechte vordere Seitenrahmen (32), welche vor einem Fahrgastraum (12) angeordnet sind; und linke und rechte Bodenrahmen (15), welche sich von den linken und rechten vorderen Seitenrahmen aus kontinuierlich erstrecken, eine Bodenplatte (41) von dem Fahrgastraum, welche einen erhöhten Bodenabschnitt (51) hat, welcher derart ausgebildet ist, dass er oberhalb eines Fluidbehälters (23) angeordnet ist, welcher zwischen den linken und rechten Bodenrahmen (15) angeordnet ist,
**dadurch gekennzeichnet,**
**dass** jeder von den linken und rechten Bodenrahmen (15) eine im Allgemeinen U-förmige Querschnittsform hat, welche eine nach oben weisende Öffnung hat, und an gegenüberliegenden oberen Endrandabschnitten (15a, 15b) von der nach oben weisenden Öffnung fest mit einer unteren Fläche von der Bodenplatte (41) verbunden ist, um auf diese Weise in Verbindung mit der unteren Fläche von der Bodenplatte eine geschlossene Querschnittsform zu definieren, wobei ein Bodenabschnitt (58) von jedem von den linken und rechten Bodenrahmen, von einer Seite eines Fahrzeugkörpers (14) aus gesehen, in einer Bogenform derart nach oben gekrümmt ist, dass ein oberer Bereich (61) von dem gekrümmten Bodenabschnitt (58) nahe der Bodenplatte und unterhalb eines vorderen Wandabschnitts (54) von dem erhöhten Bodenabschnitt angeordnet ist, und
**dass** die linken und rechten Bodenrahmen (15) jeweils linke und rechte Bodenrahmenverstärkungselemente (62) haben, von denen sich jedes von nahe dem vorderen Wandabschnitt von dem erhöhten Bodenabschnitt nach vorne erstreckt und eine im Allgemeinen umgedrehte U-förmige Querschnittsform hat, welche eine nach unten weisende Öffnung hat, wobei jedes von den Bodenrahmenverstärkungselementen (62) an gegenüberliegenden unteren Endrandabschnitten (72, 73) von der nach unten weisenden Öffnung, in einer vertikal überlappenden Beziehung zu den oberen Endrandabschnitten (15a, 15b) von einem entsprechenden einen von den vorderen Seitenrahmen, fest mit einer oberen Fläche von der Bodenplatte (41) verbunden ist, um auf diese Weise in Verbindung mit der oberen Fläche von der Bodenplatte eine geschlossene Querschnittsform zu definieren, wodurch die Bodenrahmen (15) und die Bodenrahmenverstärkungselemente (62) an den oberen Endrandabschnitten und den unteren Endrandabschnitten aneinander fixiert sind, wobei die Bodenplatte dazwischen angeordnet ist, und wobei die geschlossenen Querschnittsformen oberhalb und unterhalb der Bodenplatte definiert sind.

2. Fahrzeugkörper-Bodenstruktur nach Anspruch 1, ferner umfassend linke und rechte vordere Sitzhalterungen (16), die sich jeweils in einer Fahrzeugbreitenrichtung von einem hinteren Endabschnitt (75) von einem entsprechenden einen der Bodenrahmenverstärkungselemente (62) zu einem entsprechenden einen von linken und rechten Seitenschwellern (28) erstrecken, welche linke und rechte Seitenränder des Bodens definieren, wobei jede von den Sitzhalterungen (16) fest mit dem hinteren Endabschnitt (75) von dem entsprechenden Bodenrahmenverstärkungselement (62) und dem entsprechenden Seitenschweller (28) verbunden ist.

3. Fahrzeugkörper-Bodenstruktur nach Anspruch 2, wobei jede von den Sitzhalterungen (16) eine geschlossene Querschnittsform unmittelbar unter der Bodenplatte (41) definiert.

4. Fahrzeugkörper-Bodenstruktur nach Anspruch 2 oder 3, wobei, von einer Seite des Fahrzeugkörpers aus gesehen, jede von den Sitzhalterungen (16) eine abgestufte Querschnittsform hat.

5. Fahrzeugkörper-Bodenstruktur nach einem der Ansprüche 2 bis 4, wobei jede von den Sitzhalterungen (16) eine Verstärkungsplatte (78) hat, welche mit wenigstens einem Teil davon und mit dem entsprechenden Seitenschweller fest verbunden ist.

6. Fahrzeugkörper-Bodenstruktur nach einem der Ansprüche 1 bis 5, wobei die linken und rechten Bodenrahmenverstärkungselemente (62) **dadurch** miteinander verbunden sind, dass jedes von den Bodenrahmenverstärkungselementen an einem vorderen Abschnitt (81) davon fest mit einem Verstärkungsabschnitt (86) von einer unteren Armaturenbrettplatte (44) verbunden ist, welche eine vordere Trennwand des Fahrgastraums bildet.

## Revendications

1. Structure de plancher de carrosserie de véhicule, qui comprend : des cadres latéraux gauche et droit (32) disposés devant un habitacle (12) ; et des cadres de plancher gauche et droit (15) s'étendant en continu à partir des cadres latéraux gauche et droit, un panneau de plancher (41) de l'habitacle comportant une partie de plancher relevée (51) formée pour être positionnée au-dessus d'un réservoir de fluide (23) disposé entre les cadres de plancher gauche et droit (15),
**caractérisée en ce que** chacun des cadres de plancher gauche et droit (15) présente une forme de section généralement en U comportant une ouverture vers le haut et est joint de façon fixée au niveau de parties de bord d'extrémité supérieure opposées (15a, 15b) de l'ouverture vers le haut à une surface inférieure du panneau de plancher (41) pour ainsi définir une forme de section fermée conjointement avec la surface inférieure du panneau de plancher, une partie inférieure (58) de chacun des cadres de plancher gauche et droit, en vue à partir d'un côté d'une carrosserie de véhicule (14), étant incurvée vers le haut dans une forme arquée de sorte qu'une région supérieure (61) de la partie inférieure incurvée (58) soit disposée près du panneau de plancher et en dessous d'une partie de paroi avant (54) de la partie de plancher relevée, et
**en ce que** les cadres de plancher gauche et droit (15) comportent des éléments de renfort de cadre de plancher gauche et droit (62), respectivement, chacun s'étendant vers l'avant à partir d' un emplacement près de la partie de paroi avant de la partie de plancher relevée et présentant une forme de section généralement en U à l'envers comportant une ouverture vers le bas, chacun des éléments de renfort de cadre de plancher (62) étant joint de façon fixée au niveau de parties de bord d'extrémité inférieure opposées (72, 73) de l'ouverture vers le bas à une surface supérieure du panneau de plancher (41), dans une relation de chevauchement vertical par rapport aux parties de bord d'extrémité supérieure (15a, 15b) d'un cadre correspondant des cadres latéraux avant, pour ainsi définir une forme de section fermée conjointement avec la surface supérieure du panneau de plancher, moyennant quoi les cadres de plancher (15) et les éléments de renfort de cadre de plancher (62) sont fixés l'un à l'autre au niveau des parties de bord d'extrémité supérieure et des parties de bord d'extrémité inférieure avec le panneau de plancher pris en sandwich entre celles-ci et avec les formes de section fermée définies par-dessus et en dessous de panneau de plancher.

2. Structure de plancher de carrosserie de véhicule selon la revendication 1, comprenant en outre des supports de siège avant gauche et droit (16) s'étendant chacun dans le sens de la largeur du véhicule à partir d'une partie d'extrémité arrière (75) d'un élément correspondant des éléments de renfort de cadre de plancher (62) jusqu'à un seuil correspondant de seuils latéraux gauche et droit (28) définissant des bords latéraux gauche et droit du plancher, chacun des supports de siège (16) étant joint de façon fixée à la partie d'extrémité arrière (75) de l'élément de renfort de cadre de plancher correspondant (62) et au seuil latéral correspondant (28).

3. Structure de plancher de carrosserie de véhicule selon la revendication 2, dans laquelle chacun des supports de siège (16) définit une forme de section fermée immédiatement en dessous du panneau de plancher (41).

4. Structure de plancher de carrosserie de véhicule selon la revendication 2 ou 3, dans laquelle, en vue à partir d'un côté de la carrosserie de véhicule, chacun des supports de siège (16) présente une forme de section étagée.

5. Structure de plancher de carrosserie de véhicule selon une quelconque des revendications 2 à 4, dans laquelle chacun des supports de siège (16) comporte une plaque de renfort (78) jointe de façon fixée à au moins une partie de celui-ci et au seuil latéral correspondant.

6. Structure de plancher de carrosserie de véhicule selon une quelconque des revendications 1 à 5, dans laquelle les éléments de renfort de cadre de plancher gauche et droit (62) sont reliés mutuellement par chacun des éléments de renfort de cadre de plancher reliés de façon fixée au niveau d'une partie avant (81) de ceux-ci à une partie de renfort (86) d'un panneau inférieur de tableau de bord (44) qui constitue une paroi de séparation avant de l'habitacle.
